# FASCICULE DE BREVET EUROPEEN

(11) **EP 3 839 661 B1**
(45) Date de publication et mention de la délivrance du brevet: **10.08.2022**
(21) Numéro de dépôt: 19217506.5
(22) Date de dépôt: 18.12.2019
(51) Int. Cl.: G04B 31/04

(54) **DISPOSITIF AMORTISSEUR DE CHOCS AVEC VERROUILLAGE ANGULAIRE**
STOSSDÄMPFERVORRICHTUNG MIT WINKELVERRIEGELUNG
SHOCK ABSORBER DEVICE WITH ANGULAR LOCKING

(43) Date de publication de la demande: 23.06.2021
(73) Titulaire: ETA SA Manufacture Horlogère Suisse, 2540 Grenchen (CH)
(72) Inventeur: VILLAR, M. Ivan, 2555 Brügg (CH)
(74) Mandataire: ICB SA

(56) Documents cités:
- EP-A1- 3 220 211
- EP-A1- 3 470 934
- CH-A2- 705 075
- CH-A2- 707 501
- CH-B1- 698 675
- FR-A- 1 008 173

## Description

### Domaine de l'invention

La présente invention concerne un dispositif amortisseur de chocs pour un axe d'un mobile d'un dispositif micromécanique, en particulier mais non exclusivement un mouvement d'horlogerie. Elle concerne plus précisément un dispositif amortisseur de chocs comprenant des moyens de verrouillage en rotation du ressort amortisseur.

### Arrière-plan de l'invention

Les dispositifs amortisseurs de chocs, encore appelés « paliers amortisseurs de chocs » ou « systèmes antichocs » sont connus de longue date par les constructeurs de montres mécaniques. Ces dispositifs amortisseurs de chocs ont pour but de permettre à un axe d'absorber l'énergie résultant d'un choc, en particulier d'un choc latéral, en l'autorisant à s'écarter momentanément de sa position de repos, puis à retourner à cette position de repos sous l'effet d'une force élastique de rappel. On comprendra que, dans les mécanismes de micromécanique en général, et dans les mouvements d'horlogerie en particulier, la plupart des axes s'étendent verticalement par rapport au plan dans lequel de tels mécanismes de micromécanique ou mouvements d'horlogerie s'étendent. Un mouvement d'horlogerie peut donc subir essentiellement deux types de chocs différents : soit un choc axial, si la montre tombe sensiblement à plat sur une surface ; soit un choc latéral, si la montre tombe sur le côté de la carrure. Des deux types de chocs, le choc latéral est le plus gênant. En effet, dans le cas d'un choc axial, la force résultant de ce choc s'exerce sensiblement perpendiculairement au fond de la montre, et donc approximativement parallèlement à la direction dans laquelle s'étendent les axes du mouvement d'horlogerie. Les risques que ces axes se déboîtent ou cassent sont donc assez limités. Par contre, en cas de choc latéral, la force résultant du choc s'exerce selon une direction approximativement perpendiculaire aux axes, de sorte que le risque que les axes sortent de leur logement et/ou se cassent est élevé.

Pour résoudre ce problème, les constructeurs de montres mécaniques et autres mécanismes de micromécanique ont donc proposé des dispositifs amortisseurs de chocs. Brièvement résumé, de tels dispositifs amortisseurs de chocs comprennent un support dont une base est dépourvue de fond pour laisser le passage à un axe terminé par un tigeron. Le support reçoit un chaton qui est une pièce de forme générale annulaire et qui supporte de manière étagée une pierre percée traversée par le tigeron de l'axe et une pierre contre-pivot. L'ensemble formé par le chaton, la pierre percée et la pierre contre-pivot est maintenu élastiquement dans le support au moyen d'un élément ressort monté sur le support de manière amovible et qui exerce sur la pierre contre-pivot une force élastique de plaquage. De tels dispositifs amortisseurs de chocs sont notamment commercialisés sous la marque Incabloc^{®}. Quant à l'élément ressort, il peut notamment être réalisé en laiton ou bien avec un acier ressort tel que la nuance austénitique cobalt-chrome commercialisée sous la marque Phynox^{©}KL, et est classiquement obtenu par des techniques de découpage.

En cas de choc axial, la pierre percée, la pierre contre-pivot et l'axe se déplacent sensiblement perpendiculairement au fond de la montre, à l'encontre de la force élastique de rappel de l'élément ressort qui ramène tout cet équipage en position de repos.

En cas de choc latéral, l'axe va être désaxé et va venir buter contre la base du support, ce qui provoque le décentrage de la pierre percée et, par suite, du chaton et de la pierre contre-pivot. Dans ce cas aussi, l'élément ressort ramène tous les éléments dans leur position d'équilibre.

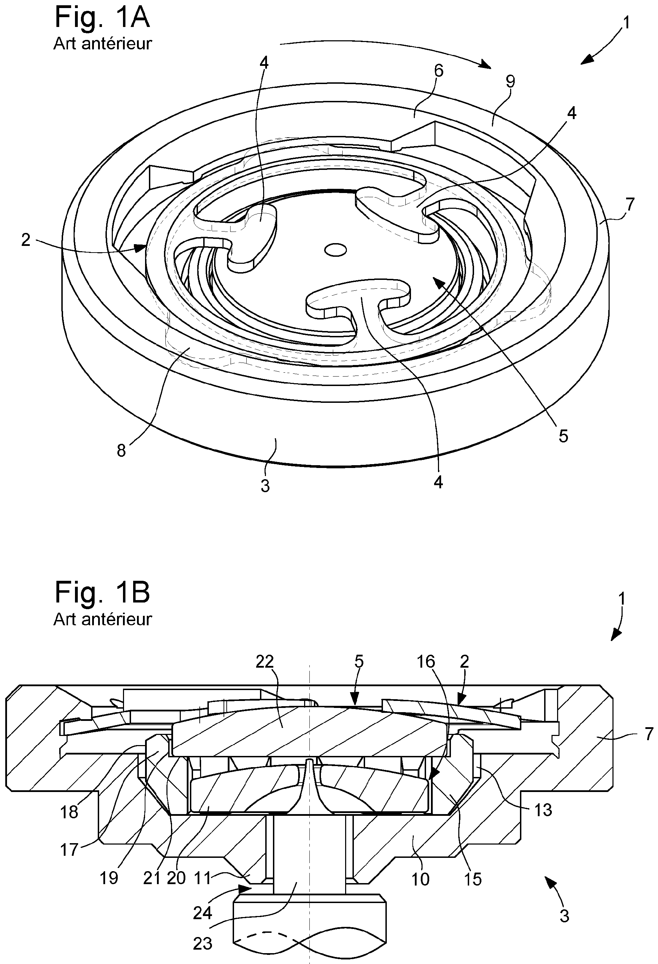

Les figures 1A et 1B représentent un tel dispositif amortisseur de chocs 1 avec l'élément ressort 2 fixé sur un support 3. L'élément ressort 2 sous forme d'un anneau ressort comporte trois bras 4 régulièrement espacés qui viennent plaquer le module pivot 5 dans le logement du support. Le montage de l'anneau ressort sur le support s'effectue via une fixation à baïonnette. Pour ce faire, le support 3 comprend une portée périphérique 6 qui s'étend depuis le rebord 7 du support 3 vers le centre de ce support 3. Pour coopérer avec la portée périphérique 6, l'anneau ressort 2 est muni sur sa périphérie extérieure de trois oreilles 8 régulièrement espacées qui s'étendent radialement à l'opposé du centre de l'anneau ressort 2. Ces trois oreilles 8 confèrent à l'anneau ressort 2 un diamètre extérieur qui excède le diamètre intérieur de la portée périphérique 6. Par conséquent, pour permettre le montage de l'anneau ressort 2 sur le support 3, il est prévu dans la portée périphérique 6 des encoches 9 au nombre de trois. Par suite, pour monter l'anneau ressort 2 sur le support 3, il suffit de le présenter de sorte que les trois oreilles 8 s'engagent dans les trois encoches 9 correspondantes, puis de le faire pivoter afin de permettre aux oreilles 8 de glisser sous la portée périphérique 6.

Comme déjà expliqué, un dispositif amortisseur de chocs est destiné à permettre à un axe de micromécanique, par exemple logé dans un mouvement horloger, d'absorber sans casser l'énergie résultant d'un choc, notamment d'un choc latéral, en permettant à cet axe de se déplacer momentanément sous l'effet d'un choc avant de le ramener élastiquement dans sa position de repos. En fonction de l'intensité du choc et de la direction selon laquelle il s'applique, l'anneau ressort est néanmoins susceptible de pivoter sur lui-même et il est tout à fait possible qu'il se retrouve dans une situation dans laquelle les trois oreilles se présentent dans les trois encoches correspondantes. Dans une telle situation, l'anneau ressort peut se découpler du support. L'axe n'est alors plus maintenu par le dispositif amortisseur de chocs, ce qui entraîne inévitablement la panne du dispositif mécanique, par exemple horloger, dans lequel est installé ce dispositif amortisseur de chocs. Un tel risque est d'autant moins acceptable que, dans le domaine de l'horlogerie en particulier, les dispositifs amortisseurs de chocs sont majoritairement installés dans des montres qui appartiennent au segment supérieur du marché.

Pour remédier à ce problème, il a été proposé dans le brevet EP 3 220 211 de lamer la portée périphérique dans les zones situées entre deux encoches successives. Par lamage, on entend l'action de dresser la surface inférieure de la portée périphérique en enlevant de la matière au moyen d'une lame tournante. Ainsi, sont créés entre deux encoches successives des dégagements dans lesquels viennent se loger les oreilles.

La solution ci-dessus ne s'est pas révélée pleinement satisfaisante. Tout d'abord, les dégagements dans lesquels sont logées les oreilles se sont révélés insuffisamment profonds et leurs rebords périphériques insuffisamment hauts pour pouvoir garantir une bonne immobilisation en pivotement angulaire de l'anneau ressort en cas de chocs, notamment en cas de chocs latéraux. D'autre part, l'usinage des dégagements au moyen d'une fraise, habituellement une fraise de type T, s'est avéré extrêmement long, fastidieux et avec des résultats aléatoires. Durant les opérations d'usinage, il fallait notamment veiller à ne pas mordre sur le diamètre intérieur de la portée périphérique. Les vitesses d'avance de la fraise T étaient faibles et des vibrations sont apparues dans l'outil de fraisage. Enfin, malgré tout le soin apporté aux opérations de fraisage, il n'était pas rare que des bavures subsistassent dans les dégagements.

Une autre solution a été proposée dans le document EP 3 470 934. Cette solution consiste à usiner en sus de premières encoches dans la portée périphérique des secondes encoches dans lesquelles les oreilles viennent s'encastrer de manière à garantir l'immobilisation angulaire de l'anneau. Cette solution est satisfaisante mais néanmoins il existe toujours un besoin pour des solutions permettant d'éviter le démontage accidentel de l'amortisseur de chocs, suite à un déplacement en rotation du ressort dans le support.

Dans un souci d'exhaustivité on mentionne aussi le document FR1008173A. Ce document décrit un dispositif amortisseur de chocs pour un axe d'un mobile d'un mouvement d'horlogerie, ce dispositif amortisseur de chocs comprenant :
- un module pivot,
- un support muni d'un logement accueillant le module pivot, le support étant surmonté d'une portée périphérique s'étendant depuis un rebord du logement vers le centre du support, ladite portée périphérique comprenant une pluralité d'évidements débouchant sur le logement avec au moins un desdits évidements formant un évidement dit de blocage,
- un anneau ressort pouvant respectivement adopter une position dite de montage et une position dite de fixation par rapport au support, ledit anneau ressort étant agencé entre la portée périphérique et le module pivot de manière à exercer une contrainte élastique sur ledit module pivot lorsque l'anneau ressort est en position de fixation, ledit anneau ressort étant muni sur sa périphérie extérieure d'une pluralité d'ergots avec au moins un desdits ergots formant un ergot dit de blocage, la pluralité d'ergots s'étendant radialement à l'opposé du centre du support et conférant à l'anneau ressort un diamètre extérieur qui excède le diamètre intérieur de la portée périphérique, la pluralité d'ergots coopérant avec la portée périphérique lors du montage et de la fixation de l'anneau ressort au support, les évidements du support étant en nombre supérieur au nombre d'ergots et ayant des dimensions au moins égales à celles des ergots, de manière à permettre l'engagement des ergots dans les évidements correspondants lors du montage.

### Résumé de l'invention

La présente invention a pour objet de proposer un dispositif amortisseur de chocs dont les risques que ses différents composants se déboîtent en cas de choc axial ou latéral sont considérablement réduits, voire supprimés.

Plus précisément, la présente invention concerne un dispositif amortisseur tel que défini dans la revendication indépendante 1 annexée.

Des réalisations préférées sont définies dans les revendications dépendantes.

Selon l'art antérieur, tous les ergots sont disposés sous la portée périphérique du support avec pour conséquence que l'anneau ressort est maintenu dans un même plan lorsqu'il est en position de fixation (en l'absence de chocs). Selon l'invention, l'anneau ressort est incurvé sur certains de ces tronçons lorsqu'il est en position de fixation ce qui permet d'assurer un meilleur verrouillage de l'anneau ressort dans sa position de fixation.

D'autres caractéristiques et avantages de la présente invention apparaîtront à la lecture de la description détaillée ci-dessous faisant référence aux figures suivantes.

### Brève description des figures

Selon l'art antérieur, la figure 1A déjà citée illustre de manière schématique avec une vue en perspective un dispositif amortisseur de chocs muni d'un anneau ressort susceptible de se déplacer angulairement en cas de chocs. La figure 1B représente une vue en coupe droite de ce même dispositif amortisseur de chocs.

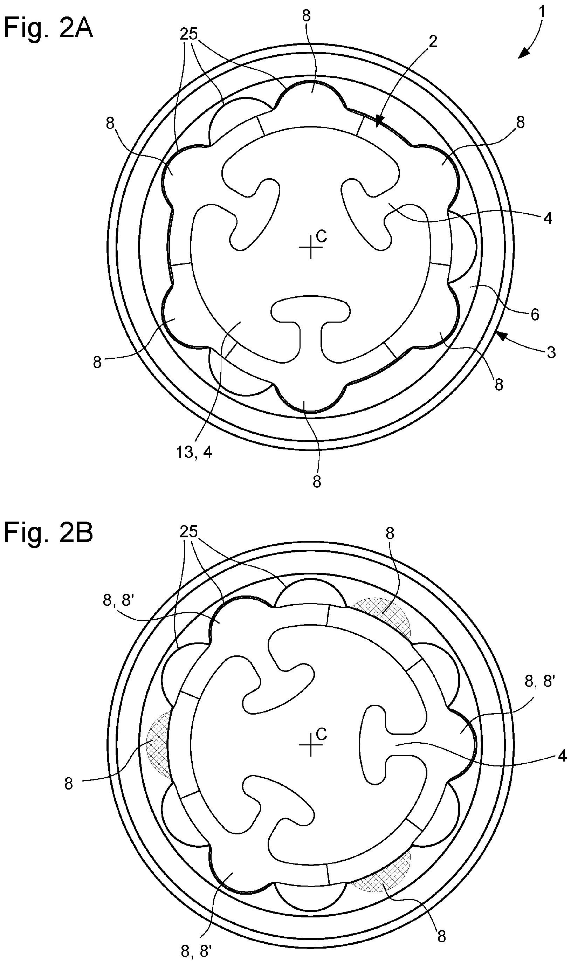

Les figures 2A et 2B sont des vues en plan schématique du dispositif amortisseur de chocs selon une variante de l'invention avec trois ergots de blocage. La figure 2A montre le positionnement de l'anneau ressort sur le support lors du montage et la figure 2B montre le positionnement de l'anneau ressort lors de la fixation.

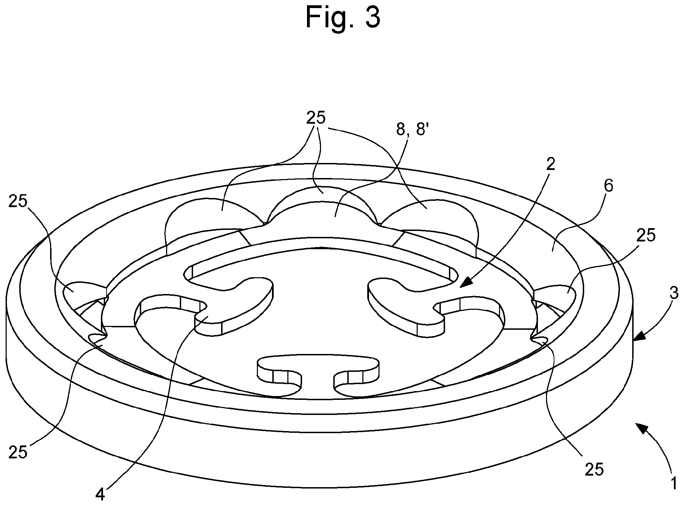

La figure 3 représente une vue en perspective de la variante à trois ergots de blocage.

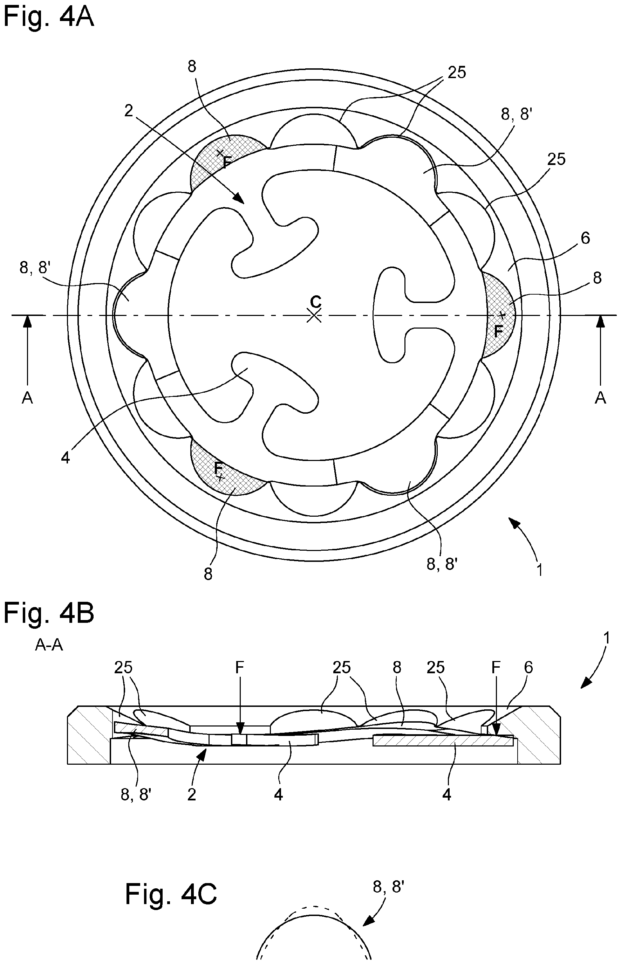

La figure 4A est une vue en plan de la variante avec trois ergots de blocage qui présente pour différence par rapport aux représentations des figures 2A et 2B que les bras de l'anneau ressort sont décalés angulairement par rapport aux ergots de blocage. La figure 4B représente une vue en coupe selon le plan A-A de la figure 4A. La figure 4C est une vue en plan d'un ergot de blocage de l'anneau ressort respectivement lors du montage avec une représentation en trait continu et après verrouillage avec une représentation en traits pointillés.

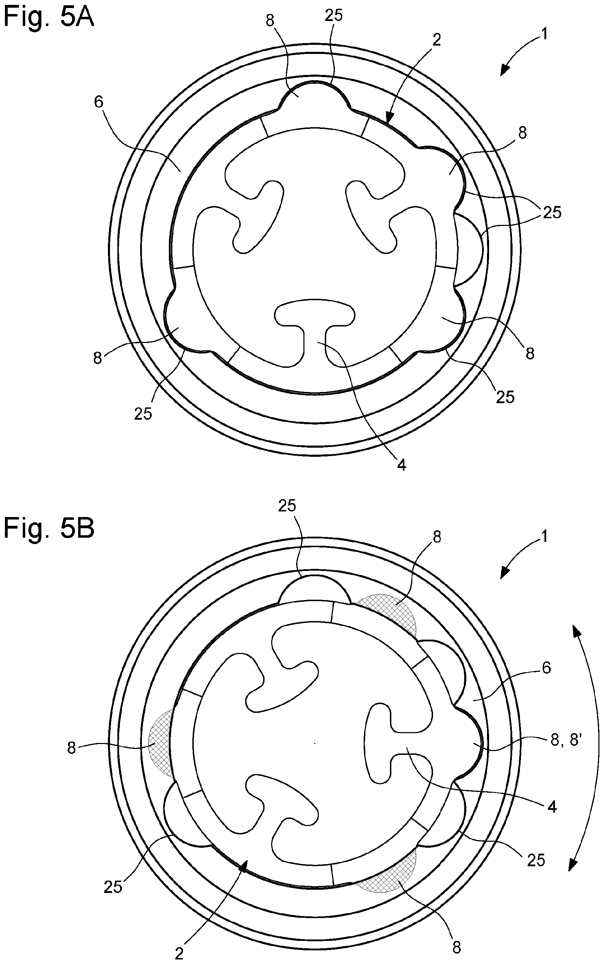

Les figures 5A et 5B sont des vues en plan schématique du dispositif amortisseur de chocs selon une variante de l'invention avec un ergot de blocage. La figure 5A montre le positionnement de l'anneau ressort sur le support lors du montage et la figure 5B montre le positionnement de l'anneau ressort lors de la fixation.

### Description détaillée de l'invention

La présente invention se rapporte à un dispositif amortisseur de chocs. De manière connue, tel que représenté aux figures 1A et 1B, le dispositif amortisseur de chocs 1 comprend notamment un support 3 qui se présente sous la forme d'une coupelle 10 dont une base 11 est dépourvue de fond et qui est délimitée à sa périphérie par un premier rebord 7. Le support 3 comporte une portée périphérique 6 qui s'étend depuis le premier rebord 7 vers le centre du support.

Le rebord 7 définit avec la coupelle 10 un logement 13 dans lequel un module pivot 5 est inséré. Ce module pivot 5 comprend un chaton 15, c'est-à-dire une pièce comprenant un orifice central circulaire 16 et un deuxième rebord 17 délimité par une paroi latérale externe 18 et une paroi latérale interne 19. Dans l'orifice central circulaire 16 est insérée une pierre percée 20 dont le diamètre correspond à celui de l'orifice central circulaire 16. Quant à la paroi latérale interne 19 du chaton 15, elle est munie d'un épaulement 21 sur lequel est posée une pierre contre-pivot 22.

Le module pivot 5 ainsi agencé est placé dans le logement 13 du support 3, puis l'ensemble ainsi obtenu est inséré, par exemple dans un orifice d'une platine horlogère ou dans l'un des ponts d'un mouvement horloger. Le module pivot 5 est agencé pour coopérer avec un tigeron 23 d'un axe 24.

Le dispositif amortisseur de chocs 1 comprend en outre des moyens élastiques 2 prévus pour coopérer avec le module pivot 5 afin d'amortir les chocs et ramener le module pivot 5 dans sa position de repos lorsque les contraintes induites par les chocs s'estompent. Ces moyens élastiques 2 sont fixés à baïonnettes sur le support 3 et sont, de préférence, également en contact avec le module pivot 5.

Tel que représenté à la figure 2A selon l'invention, les moyens élastiques 2 se présentent avantageusement, sous la forme d'un anneau ressort de type plat, c'est-à-dire découpé dans une bande ou un ruban dont une largeur est sensiblement supérieure à l'épaisseur. Cet anneau ressort 2 est de forme circulaire, centré sur un point Ç. Il est préférentiellement réalisé dans un matériau métallique cristallin, en particulier dans un acier. Il peut également être réalisé dans un alliage métallique amorphe ou encore dans un matériau plastique.

L'anneau ressort 2 comprend par exemple trois bras 4 régulièrement espacés qui s'étendent radialement vers le centre C de cet anneau ressort 2. Ces trois bras 4 permettent à l'anneau ressort 2 de plaquer le module pivot 5 dans le logement 13 du support 3. Il est également envisageable de réaliser un anneau ressort avec minimum deux bras.

L'anneau ressort 2 selon l'invention est muni sur sa périphérie extérieure d'une pluralité d'ergots 8 qui s'étendent radialement à l'opposé du centre C. Les ergots 8 confèrent à l'anneau ressort 2 un diamètre extérieur qui excède le diamètre intérieur de la portée périphérique 6 du support 3. Avantageusement, les ergots ont une forme circulaire dessinant une oreille. D'autres formes sont également envisageables : triangulaire, rectangulaire, etc. Ils sont minimum au nombre de trois. Cette configuration avec seulement trois ergots est néanmoins plus adaptée lorsque l'anneau ressort comporte seulement deux bras. Avantageusement, ils sont minimum au nombre de quatre comme dans la variante des figures 5A et 5B. Préférentiellement, ils sont au nombre de six comme dans la variante des figures 2A et 2B. Ces ergots sont préférentiellement répartis à intervalles réguliers sur la périphérie extérieure de l'anneau ressort comme illustré aux figures 2A et 2B pour la variante préférée. Au moins un des ergots 8, dit ergot de blocage avec une représentation 8' dans les figures, va servir à verrouiller l'anneau ressort dans sa position angulaire après fixation sur le support.

Les bras 4 peuvent être disposés en regard des ergots 8 comme illustré à la figure 2A avec, pour une configuration à six ergots, un bras disposé en regard d'un ergot pour un ergot sur deux. Selon la variante de la figure 5A avec quatre ergots, les bras 4 sont disposés soit entre deux ergots 8, soit en regard des ergots 8.

Selon l'invention, la portée périphérique 6 du support 3 comporte plusieurs évidements 25 débouchant sur le logement du support accueillant le module pivot. Ces évidements ont des dimensions (largeur et profondeur) au moins égales à celles des ergots de manière à permettre l'engagement des ergots 8 dans les évidements 25 correspondants lors du montage. Préférentiellement, ces évidements 25 sont chacun de forme et dimensions similaires à celles des ergots 8 tels que représentés dans les figures 2A et 5A. Dans ces exemples, les ergots et les évidements sont de forme et dimensions similaires avec une forme circulaire dessinant une oreille. Il est également envisageable que l'évidement présente une des dimensions (largeur ou profondeur) sensiblement égale à celle de l'ergot et l'autre dimension de taille supérieure.

Selon l'invention, le nombre d'évidements est supérieur d'au moins une unité au nombre d'ergots. Il doit être au moins égal au nombre d'ergots pour permettre le montage de l'anneau ressort sur le support. Ces évidements permettant le montage présente une répartition angulaire semblable à celle des ergots pour permettre ce montage. Il doit en outre comporter au moins un évidement supplémentaire, dit évidement de blocage avec une représentation 25' dans les figures, dans lequel se loge l'ergot 8' dit de blocage lors de la fixation. Préférentiellement, cet évidement de blocage 25' est contigu à au moins un évidement 25 permettant le montage. Selon la variante préférée représentée aux figures 2A et 2B, le nombre d'ergots 8 est de six et le nombre d'évidements 25 est de neuf. De ces six ergots 8, trois sont des ergots 8' dits de blocage se logeant lors de la fixation dans trois évidements 25' de blocage. Selon la variante représentée aux figures 5A et 5B, le nombre d'ergots 8 est de quatre et le nombre d'évidements 25 est de cinq avec un ergot de blocage 8' se logeant lors de la fixation dans un évidement 25' de blocage.

De préférence, les évidements 25 sont disposés au moins sur une portion angulaire de la portée périphérique 6 en une série de trois évidements 25 disposés côte à côte comme montré aux figures 2A et 5A. Dans cette série de trois, les deux évidements 25 aux extrémités permettent respectivement l'engagement d'un ergot 8 lors du montage et l'évidement central forme l'évidement de blocage 25' pour le logement de l'ergot 8' de blocage lors de la fixation. Préférentiellement, le support 3 comporte trois séries de trois évidements 25 espacées entre elles d'un angle de 120°.

Selon l'invention, les ergots et les évidements sont agencés de manière à ce qu'en position de fixation, un ergot de blocage soit encadré par des ergots positionnés sous la portée périphérique. La portée périphérique applique une contrainte F sur les ergots positionnés sous la portée périphérique. Cette contrainte induit une déformation du tronçon de l'anneau ressort disposé entre les deux ergots positionnés sous la portée périphérique. A la figure 4B, on peut visualiser avec une vue en coupe droite l'incurvation de l'anneau ressort 2 entre les deux points d'application de la contrainte F. On peut également la visualiser à la figure 3. Cette déformation induit un changement de forme de l'ergot de blocage 8' comme schématisé à la figure 4C, ce qui assure son immobilisation avec un éventuel léger jeu angulaire au sein de l'évidement de blocage 25'. Sous l'effet de la déformation, l'ergot de blocage s'allonge légèrement et n'est plus libre de se dégager hors de l'évidement de blocage, avec pour conséquence que l'anneau ressort est bloqué angulairement. On précisera que, selon la forme initiale de l'ergot, le contact entre l'ergot de blocage et l'évidement de blocage suite à la déformation peut se faire à la base de l'ergot sur les côtés latéraux ou encore à la pointe de l'ergot.

Pour l'ensemble des variantes, il y a trois points d'application de contrainte F sur les ergots. Pour la variante préférée des figures 2A à 4B, il y a un ergot de blocage 8' entre chacun des points d'application de la contrainte. Pour la variante des figures 5A à 5B, il y a un seul ergot 8' libre de se déformer sous l'effet de l'application des contraintes et d'assurer ainsi le blocage en rotation de l'anneau ressort. Le tronçon de l'anneau ressort qui s'incurve est illustré à la figure 5B par la double flèche. On précisera que la variante des figures 2A-4B avec une répartition symétrique des ergots et des évidements est préférée pour garantir des propriétés optimales d'amortissement de l'anneau ressort.

Selon d'autres variantes non représentées, le dispositif d'amortissement de chocs pourrait comporter deux, quatre, cinq ou plus ergots de blocage.

Pour finir, le démontage de l'anneau ressort peut être réalisé en appliquant une pression sur l'anneau ressort et en le mettant en rotation de manière à positionner chaque ergot devant un évidement.

### Légende

1. Dispositif amortisseur de chocs ou système antichoc
2. Moyens élastiques, élément ressort ou anneau ressort
3. Support
4. Bras
5. Module pivot
6. Portée périphérique
7. Rebord ou premier rebord
8. Ergot ou oreille avec 8'pour l'ergot de blocage ou l'oreille de blocage
9. Encoche
10. Coupelle
11. Base
13. Logement
15. Chaton
16. Orifice central circulaire
17. Deuxième rebord
18. Paroi latérale externe
19. Paroi latérale interne
20. Pierre percée
21. Epaulement
22. Pierre contre-pivot
23. Tigeron
24. Axe
25. Evidement avec 25' pour l'évidement de blocage
F : Force ou contrainte
C : Centre

## Revendications

1. Dispositif amortisseur de chocs (1) pour un axe (24) d'un mobile d'un dispositif micromécanique, en particulier un mouvement d'horlogerie, ce dispositif amortisseur de chocs (1) comprenant :
- un module pivot (5),
- un support (3) muni d'un logement (13) accueillant le module pivot (5), le support (3) étant surmonté d'une portée périphérique (6) s'étendant depuis un rebord (7) du logement (13) vers le centre (C) du support (3), ladite portée périphérique (6) comprenant une pluralité d'évidements (25) débouchant sur le logement (13) avec au moins un desdits évidements (25) formant un évidement dit de blocage (25'),
- un anneau ressort (2) pouvant respectivement adopter une position dite de montage et une position dite de fixation par rapport au support (3), ledit anneau ressort (2) étant agencé entre la portée périphérique (6) et le module pivot (5) de manière à exercer une contrainte élastique sur ledit module pivot (5) lorsque l'anneau ressort (2) est en position de fixation, ledit anneau ressort (2) étant muni sur sa périphérie extérieure d'une pluralité d'ergots (8) avec au moins un desdits ergots (8) formant un ergot dit de blocage (8'), la pluralité d'ergots (8) s'étendant radialement à l'opposé du centre (C) du support (3) et conférant à l'anneau ressort (2) un diamètre extérieur qui excède le diamètre intérieur de la portée périphérique (6), la pluralité d'ergots (8) coopérant avec la portée périphérique (6) lors du montage et de la fixation à baïonnette de l'anneau ressort (2) au support (3), les évidements (25) du support (3) ayant des dimensions au moins égales à celles des ergots (8) de manière à permettre l'engagement des ergots (8) dans les évidements (25) correspondants lors du montage,
le dispositif amortisseur de chocs (1) étant **caractérisé en ce que** :
- le nombre d'évidements (25) est supérieur au nombre d'ergots (8) avec au moins un évidement (25) en surnombre formant l'évidement de blocage (25'),
- dans la position de fixation, une partie des ergots (8) se positionne sous la portée périphérique (6) et une autre partie comprenant au moins ledit ergot de blocage (8') se positionne dans ledit évidement de blocage (25'), ledit ergot de blocage (8') étant encadré de chaque côté par un ergot (8) positionné sous la portée périphérique (6), chaque ergot (8) positionné sous la portée périphérique (6) étant soumis à une contrainte (F) appliquée par ladite portée périphérique (6), ladite contrainte (F) induisant une déformation en une forme incurvée du tronçon de la portée périphérique (6) s'étendant entre les ergots (8) positionnés sous la portée périphérique (6), la déformation de l'ergot de blocage (8') disposé sur ledit tronçon permettant de verrouiller l'anneau ressort (2) dans sa position de fixation.

2. Dispositif amortisseur de chocs (1) selon la revendication 1, **caractérisé en ce que** les évidements (25) sont disposés au moins sur une portion angulaire de la portée périphérique (6) en une série de trois évidements (25) disposés côte à côte, les deux évidements (25) aux extrémités de la portion angulaire permettent respectivement l'engagement de deux ergots (8) de l'anneau ressort (2) en position de montage et l'évidement (25) positionné au centre de la série de trois évidements (25) formant l'évidement de blocage (25') pour le logement de l'ergot (8') de blocage lorsque l'anneau ressort (2) est en position de fixation.

3. Dispositif amortisseur de chocs (1) selon la revendication 1 ou 2, **caractérisé en ce que** les évidements (25) ont une forme et des dimensions similaires à celles des ergots (8).

4. Dispositif amortisseur de chocs (1) selon la revendication 1 ou 2, **caractérisé en ce que** les évidements (25) ont une des dimensions choisie parmi la largeur ou la profondeur sensiblement égale à la dimension correspondante de l'ergot (8) et l'autre dimension choisie parmi la largeur ou la profondeur de taille supérieure.

5. Dispositif amortisseur de chocs (1) selon l'une des revendications précédentes, **caractérisé en ce que** les ergots (8) ont une forme circulaire dessinant une oreille.

6. Dispositif amortisseur de chocs (1) selon l'une des revendications précédentes, **caractérisé en ce que** tous les évidements (25) et tous les ergots (8) ont la même forme et les mêmes dimensions.

7. Dispositif amortisseur de chocs (1) selon l'une des revendications précédentes, **caractérisé en ce que** l'anneau ressort (2) comporte 1, 2, 3, 4 ou 5 ergots de blocage (8').

8. Dispositif amortisseur de chocs (1) selon l'une des revendications précédentes, **caractérisé en ce que** les ergots (8) sont au nombre de quatre et les évidements (25) au nombre de cinq.

9. Dispositif amortisseur de chocs (1) selon l'une des revendications 1 à 7, **caractérisé en ce que** les ergots (8) sont au nombre de six et les évidements (25) au nombre de neuf.

10. Dispositif amortisseur de chocs (1) selon la revendication précédente, **caractérisé en ce que** le support (3) comporte trois séries de trois évidements (25) espacées entre elles d'un angle de 120°.

11. Dispositif amortisseur de chocs (1) selon l'une des revendications précédentes, **caractérisé en ce que** l'anneau ressort (2) comporte sur sa périphérie intérieure trois bras (4) régulièrement espacés destinés à exercer la contrainte élastique sur ledit module pivot (5) lorsque l'anneau ressort (2) est en position de fixation.

## Patentansprüche

1. Stoßdämpfervorrichtung (1) für eine Welle (24) eines Drehteils einer mikromechanischen Vorrichtung, insbesondere eines Uhrwerks eines Zeitmessers, wobei diese Stoßdämpfervorrichtung (1) umfasst:
- ein Zapfenmodul (5),
- einen Träger (3), der mit einer Aufnahme (13) ausgestattet ist, die das Zapfenmodul (5) empfängt, wobei der Träger (3) von einer peripheren Auflagefläche (6) überragt wird, die sich ab einer Kante (7) der Aufnahme (13) in Richtung des Zentrums (C) des Trägers (3) erstreckt, wobei die periphere Auflagefläche (6) eine Vielzahl von Aushöhlungen (25) umfasst, die auf der Aufnahme (13) ausmünden, mit mindestens einer der Aushöhlungen (25), die eine Blockieraushöhlung (25') bildet,
- einen Federring (2), der jeweils eine Montageposition und eine Befestigungsposition im Verhältnis zum Träger (3) einnehmen kann, wobei der Federring (2) zwischen der peripheren Auflagefläche (6) und dem Zapfenmodul (5) derart eingerichtet ist, dass eine elastische Spannung auf das Zapfenmodul (5) ausgeübt wird, wenn der Federring (2) in Befestigungsposition ist, wobei der Federring (2) auf seiner äußeren Peripherie mit einer Vielzahl von Spornen (8) versehen ist, wobei mindestens einer der Sporne (8) einen Blockiersporn (8') bildet, wobei sich die Vielzahl von Spornen (8) radial entgegengesetzt zum Zentrum (C) des Trägers (3) erstrecken und dem Federring (2) einen Außendurchmesser verleihen, der über den Innendurchmesser der peripheren Auflagefläche (6) hinausreicht, wobei die Vielzahl von Spornen (8) mit der peripheren Auflagefläche (6) bei der Montage und der Bajonettbefestigung des Federrings (2) am Träger (3) zusammenwirken, wobei die Aushöhlungen (25) des Trägers (3) Abmessungen haben, die mindestens gleich denen der Sporne (8) sind, so dass das Eingreifen der Sporne (8) in die entsprechenden Aushöhlungen (25) bei der Montage gestattet ist,
wobei die Stoßdämpfervorrichtung (1) **dadurch gekennzeichnet ist, dass**:
- die Anzahl der Aushöhlungen (25) größer als die Anzahl der Sporne (8) ist mit mindestens einer überzähligen Aushöhlung (25), die die Blockieraushöhlung (25') bildet,
- sich in der Befestigungsposition ein Teil der Sporne (8) unter der peripheren Auflagefläche (6) positioniert und sich ein anderer Teil, der mindestens den Blockiersporn (8') umfasst, in der Blockieraushöhlung (25') positioniert, wobei der Blockiersporn (8') auf jeder Seite von einem Sporn (8) umgeben ist, der unter der peripheren Auflagefläche (6) positioniert ist, wobei jeder unter der peripheren Auflagefläche (6) positionierte Sporn (8) einer Spannung (F) ausgesetzt ist, die von der peripheren Auflagefläche (6) ausgeübt wird, wobei die Spannung (F) eine Verformung des Teilstücks der peripheren Auflagefläche (6) in eine gekrümmte Form induziert, das sich zwischen den Spornen (8) erstreckt, die unter der peripheren Auflagefläche (6) positioniert sind, wobei die Verformung des auf dem Teilstück angeordneten Blockiersporns (8') erlaubt, den Federring (2) in seiner Befestigungsposition zu verriegeln.

2. Stoßdämpfervorrichtung (1) nach Anspruch 1, **dadurch gekennzeichnet, dass** die Aushöhlungen (25) mindestens auf einem Winkelabschnitt der peripheren Auflagefläche (6) in einer Reihe von drei Aushöhlungen (25) angeordnet sind, die Seite an Seite angeordnet sind, wobei die zwei Aushöhlungen (25) an den Enden des Winkelabschnitts jeweils das Eingreifen von zwei Spornen (8) des Federrings (2) in Montageposition erlauben und die im Zentrum der Reihe von drei Aushöhlungen (25) positionierte Aushöhlung (25) die Blockieraushöhlung (25') für die Aufnahme des Blockiersporns (8') bildet, wenn der Federring (2) in Befestigungsposition ist.

3. Stoßdämpfervorrichtung (1) nach Anspruch 1 oder 2, **dadurch gekennzeichnet, dass** die Aushöhlungen (25) eine Form und Abmessungen haben, die denen der Sporne (8) ähneln.

4. Stoßdämpfervorrichtung (1) nach Anspruch 1 oder 2, **dadurch gekennzeichnet, dass** die Aushöhlungen (25) eine der Abmessungen haben, die aus der Breite oder der Tiefe ausgewählt ist, die etwa gleich der entsprechenden Abmessung des Sporns (8) ist und die andere Abmessung die aus der größeren Breite oder Tiefe ausgewählt ist.

5. Stoßdämpfervorrichtung (1) nach einem der vorangehenden Ansprüche, **dadurch gekennzeichnet, dass** die Sporne (8) eine runde Form haben, die ein Ohr beschreibt.

6. Stoßdämpfervorrichtung (1) nach einem der vorangehenden Ansprüche, **dadurch gekennzeichnet, dass** alle Aushöhlungen (25) und alle Sporne (8) die gleiche Form und die gleichen Abmessungen haben.

7. Stoßdämpfervorrichtung (1) nach einem der vorangehenden Ansprüche, **dadurch gekennzeichnet, dass** der Federring (2) 1, 2, 3, 4 oder 5 Blockiersporne (8') aufweist.

8. Stoßdämpfervorrichtung (1) nach einem der vorangehenden Ansprüche, **dadurch gekennzeichnet, dass** die Sporne (8) in der Anzahl von vier und die Aushöhlungen (25) in der Anzahl von fünf sind.

9. Stoßdämpfervorrichtung (1) nach einem der Ansprüche 1 bis 7, **dadurch gekennzeichnet, dass** die Sporne (8) in der Anzahl von sechs und die Aushöhlungen (25) in der Anzahl von neun sind.

10. Stoßdämpfervorrichtung (1) nach vorangehendem Anspruch, **dadurch gekennzeichnet, dass** der Träger (3) drei Reihen von drei Aushöhlungen (25) aufweist, die voneinander in einem Winkel von 120° beabstandet sind.

11. Stoßdämpfervorrichtung (1) nach einem der vorangehenden Ansprüche, **dadurch gekennzeichnet, dass** der Federring (2) auf seiner inneren Peripherie drei regelmäßig beabstandete Arme (4) aufweist, die bestimmt sind, die elastische Spannung auf das Zapfenmodul (5) auszuüben, wenn der Federring (2) in Befestigungsposition ist.

## Claims

1. Shock absorbing device (1) for an arbor (24) of a wheel set of a micromechanical device, in particular a timepiece movement, said shock absorbing device (1) comprising:
- a pivot module (5),
- a support (3) provided with a housing (13) accommodating the pivot module (5), the support (3) being surmounted by a peripheral shoulder (6) extending from a rim (7) of the housing (13) towards the centre (C) of the support (3), said peripheral shoulder (6) comprising a plurality of recesses (25) opening onto the housing (13) with at least one of said recesses (25) forming a so-called locking recess (25'),
- a spring ring (2) able to adopt respectively a so-called mounting position and a so-called attachment position with respect to the support (3), said spring ring (2) being arranged between the peripheral shoulder (6) and the pivot module (5) in order to exert an elastic force on said pivot module (5) when the spring ring (2) is in the attachment position, said spring ring (2) being provided on the outer periphery thereof with a plurality of tabs (8) with at least one of said tabs (8) forming a so-called locking tab (8'), the plurality of tabs (8) extending radially away from the centre (C) of the support (3) and giving spring ring (2) an outer diameter which exceeds the inner diameter of the peripheral shoulder (6), the plurality of tabs (8) cooperating with the peripheral shoulder (6) during the mounting and bayonet attachment of the spring ring (2) to the support (3), the recesses (25) of the support (3) having dimensions at least equal to those of the tabs (8) to allow the engagement of the tabs (8) in the corresponding recesses (25) during mounting,
the shock absorbing device (1) being **characterized in that**:
- the number of recesses (25) is greater than the number of tabs (8) with at least one extra recess (25) forming the locking recess (25'),
- in the attachment position, one part of the tabs (8) is positioned under the peripheral shoulder (6) and another part comprising at least said locking tab (8') is positioned in said locking recess (25'), said locking recess (8') being surrounded on each side by a tab (8) positioned under the peripheral shoulder (6), each tab (8) positioned under the peripheral shoulder (6) being subjected to a force (F) applied by said peripheral shoulder (6), said force (F) causing a curved deformation of the section of the peripheral shoulder (6) extending between the tabs (8) positioned under the peripheral shoulder (6), the deformation of the locking tab (8') disposed on said section allowing the spring ring (2) to be locked in the attached position thereof.

2. Shock absorbing device (1) according to claim 1, **characterized in that** the recesses (25) are disposed on at least one angular portion of the peripheral shoulder (6) in a series of three recesses (25) arranged side-by-side, the two recesses (25) at the ends of the angular portion respectively allow the engagement of two tabs (8) of the spring ring (2) in the mounting position and the recess (25) positioned at the centre of the series of three recesses (25) forming the locking recess (25') for housing the locking tab (8') when the spring ring (2) is in the attachment position.

3. Shock absorbing device (1) according to claim 1 or 2, **characterized in that** the recesses (25) have a similar shape and dimensions to those of the tabs (8).

4. Shock absorbing device (1) according to claim 1 or 2, **characterized in that** one of the dimensions of the recesses (25), chosen from the width or the depth, is substantially equal to the corresponding dimension of the tab (8) and the other dimension, chosen from the width or the depth, is of greater size.

5. Shock absorbing device (1) according to any of the preceding claims, **characterized in that** the tabs (8) have a circular ear shape.

6. Shock absorbing device (1) according to any of the preceding claims, **characterized in that** all the recesses (25) and all the tabs (8) have the same shape and the same dimensions.

7. Shock absorbing device (1) according to any of the preceding claims, **characterized in that** the spring ring (2) has 1, 2, 3, 4 or 5 locking tabs (8').

8. Shock absorbing device (1) according to any of the preceding claims, **characterized in that** the tabs (8) are four in number and the recesses (25) are five in number.

9. Shock absorbing device (1) according to any of claims 1 to 7, **characterized in that** the tabs (8) are six in number and the recesses (25) are nine in number.

10. Shock absorbing device (1) according to the preceding claim, **characterized in that** the support (3) comprises three series of three recesses (25) spaced apart from each other by an angle of 120°.

11. Shock absorbing device (1) according to any of the preceding claims, **characterized in that** the spring ring (2) has, on the inner periphery thereof, three evenly spaced arms (4) intended to exert the elastic force on said pivot module (5) when the spring ring (2) is in the attachment position.
